# EUROPÄISCHE PATENTSCHRIFT

(11) **EP 3 501 820 B1**
(45) Veröffentlichungstag und Bekanntmachung des Hinweises auf die Patenterteilung: **29.04.2020**
(21) Anmeldenummer: 17209971.5
(22) Anmeldetag: 22.12.2017
(51) Int. Cl.: B32B 27/08, B32B 27/20, B32B 27/22, B32B 27/30, B32B 27/34, B32B 1/08

(54) **FLEXIBLE KUNSTSTOFFLEITUNG SOWIE VERFAHREN ZU DEREN HERSTELLUNG UND DEREN VERWENDUNGEN**
FLEXIBLE PLASTIC CONDUIT, METHOD FOR ITS MANUFACTURE AND ITS USES
CONDUITE EN PLASTIQUE FLEXIBLE AINSI QUE SON PROCÉDÉ DE FABRICATION ET SES UTILISATIONS

(43) Veröffentlichungstag der Anmeldung: 26.06.2019
(73) Patentinhaber: EMS-Patent AG, 7013 Domat/Ems (CH)
(72) Erfinder: STÖPPELMANN, Georg, 7402 Bonaduz (CH)
(74) Vertreter: Bremi, Tobias Hans

(56) Entgegenhaltungen:
- EP-A1- 1 182 345
- EP-A1- 1 884 356
- EP-A1- 2 366 539
- US-A1- 2006 074 158

## Beschreibung

### TECHNISCHES GEBIET

Die vorliegende Erfindung betrifft eine Leitung aus thermoplastischem Material, insbesondere für Kraftstoffe im Automobilbereich, ein Verfahren zur Herstellung einer derartigen Leitung und Verwendungen solcher Leitungen.

### STAND DER TECHNIK

Die Verwendung von Kraftstoffleitungen auf Basis von Schichtstrukturen aus Kunststoffen, insbesondere aus Polyamid, gehört bereits seit längerer Zeit zum Stand der Technik. Aufgrund der Anforderungen in Bezug auf Durchlässigkeit für Kraftstoffe sowie der geforderten mechanischen Eigenschaften (z.B. Schlagzähigkeit, Bruchdehnung) und der chemischen Beständigkeit nach innen und aussen bei unterschiedlichsten Temperaturen werden dabei bevorzugt Mehrschichtrohre verwendet, welche sich durch eine hohe thermische Belastbarkeit, eine hohe Längenstabilität sowie eine grosse Widerstandsfähigkeit gegenüber den darin geführten Kraftstoffen aufweisen. Relevant ist dabei u.a. ein niedriger Wert der Durchlässigkeit (Permeation), wobei dieser niedrige Wert der Durchlässigkeit nicht nur für den Kraftstoff selber, sondern auch für gegebenenfalls darin enthaltene Additive oder geringe andere Bestandteile gegeben sein muss. Weiterhin ist eine Widerstandsfähigkeit gegenüber einem Auswaschen von Komponenten oder von Bestandteilen der Mehrschichtstruktur gefordert.

Aus der US-A-2014/246111 sind Kraftstoffleitungen für den Fahrzeugbereich bekannt, welche wenigstens fünf Schichten aufweisen und Barriereschichten, Haftvermittlerschichten und weitere Funktionsschichten umfassen. Auf der Innenseite wird insbesondere eine Schicht aus Fluorpolymer vorgesehen und als Barriereschicht eine Schicht aus EVOH (Ethylen-Vinylalkohol Copolymer).

EP-A-1 645 412 beschreibt Leitungen für Brennstoffzellen aus thermoplastischen Materialien. Als Innenschicht wird eine Schicht aus einer Polyamidformmasse vorgeschlagen, und als daran anfolgende mögliche Schichten werden unterschiedlichste Vorschläge gemacht, unter anderem auch EVOH-Schichten. Konkrete Beispiele für Schichtstrukturen werden nicht gegeben, und um eine Verbindung zwischen einer gegebenenfalls vorhandenen EVOH-Schicht und der Polyamid-Innenschicht zu gewährleisten, wird ausdrücklich auf die Notwendigkeit eines Haftvermittlers in Form einer separaten zusätzlichen Schicht hingewiesen.

US-A-2009/269532 beschreibt eine Leitung aus wenigstens zwei Schichten, beide aus Polyamid, das Kernelement ist, die Innenschicht nur mit einem organischen Stabilisator auszurüsten und ausdrücklich nicht mit einem Kupferstabilisator. Als Vorteil wird hervorgehoben, dass derartige Strukturen gegenüber Alterung, insbesondere im Kontakt mit Heissluft, gegenüber dem Stand der Technik verbessert sind und widerstandsfähiger sind im Kontakt mit korrosiven Flüssigkeiten. Soweit überhaupt Dreischichtstrukturen mit einer zentralen EVOH-Schicht offenbart werden, verfügen diese auf der Innenseite stets über eine organische Stabilisierung und auf der Aussenseite über eine Kupferstabilisierung. US-A-2015/353792 beschreibt Haftvermittler-Materialien zur Anwendung beispielsweise bei Kraftstoff-Mehrschichtleitungen. Vorgeschlagen werden dabei komplexe Copolyamide des allgemeinen Aufbaus A/B/C, beispielsweise vom Typ 6/612/12, und es wird gezeigt, dass so eine Haftung zwischen zwei unterschiedlichen Polyamidschichten gewährleistet werden kann.

Die EP-A-0 445 706 schlägt Schichtstrukturen als Kraftstoffleitungen vor, welche mindestens 3 Schichten aus mindestens 2 verschiedenen Polyamiden aufweisen. Als Vergleichsbeispiel wird eine Schichtstruktur mit einer Innenschicht aus schlagzähmodifiziertem Polyamid 6, einer Zwischenschicht aus EVOH und einer Aussenschicht aus schlagzähmodifiziertem Polyamid 6 gearbeitet und gezeigt, dass eine solche Struktur gegenüber Kälteschlag nicht genügend widerstandsfähig ist.

Aus der GB 2390658 ist unter anderem eine Kraftstoffleitung mit einer Barriereschicht aus EVOH bekannt mit einer Innenschicht aus Polyamid 6 und einer Aussenschicht aus Polyamid 612, oder auch mit Innenschicht und Aussenschicht aus Polyamid 612. Es werden Bruchdehnungen von 150 % erreicht. Bevorzugtermassen ist dabei die Innenschicht aus Polyamid 612 oder 610 gebildet, und grenzt unmittelbar an die Schicht aus EVOH. Spezifisch offenbart werden dabei insbesondere Strukturen, bei welchen nur drei Schichten vorhanden sind und bei welchen die Aussenschichten ausschliesslich aus Polyamid 610, oder Polyamid 612 oder Polyamid 6 bestehen.

Aus der EP-A-1 036 968 sind Kraftstoffleitungen bekannt, welche wenigstens 4 Schichten aufweisen, unter anderem eine Barriereschicht aus EVOH, und, als Haftvermittlerschicht zu einer äussersten Schicht aus Polyamid 12 oder Polyamid 11, eine Schicht auf Lactamrespektive Aminosäure-Basis oder auf Basis von Polyamid 69.

Aus der EP-A-1 216 826 ist ein Mehrschichtverbund mit einer EVOH-Schicht als Kraftstoffleitung bekannt, wobei als Material für eine Haftvermittlerschicht zu einer Aussenschicht, insbesondere auf Basis von Polyamid 12, ein Polyamid-Polyamin Copolymer vorgeschlagen wird. Aufgrund der offenbar beobachteten schlechten Haftung von Polyamiden auf EVOH wird vorgeschlagen, eine direkt an die EVOH-Sperrschicht grenzende Schicht auf Basis von Polyamid als spezielle Mischung auszugestalten, wobei eine Vielzahl von Polyamiden sowie die Anwesenheit eines Polyamin-Polyamid-Copolymeren als notwendig erachtet wird, um überhaupt eine gute Haftung auch bei längerem Kontakt mit Kraftstoffen sicherzustellen. In den spezifischen Beispielen wird die Innenschicht aufgrund der erforderlichen Widerstandsfähigkeit gegenüber Kraftstoffen stets als Polyamid 6-Schicht ausgestaltet. Weitere Möglichkeiten von anderen Polyamiden werden zwar beschrieben, es werden aber keine Hinweise auf spezifisch bevorzugte Polyamide beispielsweise hinsichtlich einerseits einer besonders guten Haftung an der Sperrschicht und andererseits einer Widerstandsfähigkeit gegenüber spezifischen Chemikalien gemacht.

Eine weitere Kraftstoffleitung nach dem Stand der Technik findet man in der EP-A-1 452 307 beschrieben, hier ist ebenfalls eine Sperrschicht auf Basis von EVOH vorgesehen, und, um eine Haftung an der Sperrschicht sowie eine gute Widerstandsfähigkeit gegenüber Peroxid gewährleisten zu können, wird spezifisch vorgeschlagen, die Innenschicht nicht auf Basis eines Polyamid 6-Homopolymers auszubilden, sondern auf Basis einer Mischung von Polyamid Homopolymeren, welche einen Verträglichkeitsvermittler enthalten. Auch hier werden unterschiedliche Polyamid Homopolymere angegeben, in der Regel aber ohne spezifische Angaben darüber zu machen, welche Polyamid Homopolymere eine besonders gute Haftung an der Sperrschicht und eine Widerstandsfähigkeit gegenüber spezifischen Chemikalien aufweisen.

Weiterhin sei auf die beiden Dokumente EP-A-1 036 968 sowie EP-A-1 162 061 hingewiesen, in welchen ebenfalls thermoplastische Mehrschichtverbunde beschrieben werden, welche als Sperrschicht eine Schicht aus EVOH aufweisen. Angrenzend an diese Schicht wird in der EP-A-1 162 061 eine Schicht aus einer Formmasse auf Basis von Polyamid beschrieben, wobei eine Vielzahl von möglichen Polyamiden in allgemeiner Weise angegeben wird. Spezifisch wird aber in den Beispielen nur eine Innenschicht aus Polyamid 6 offenbart. In der EP-A-1 036 968 wird insbesondere darauf abgezielt, dass Copolyamide eine verbesserte Haftung an Sperrschichten aus EVOH aufweisen. Als Innenschichten werden dabei stets Schichten aus Mischungen aus von Polyamid und Polyolefin, oder Polyamidschichten angegeben.

Die US-A-2003/0220449 betrifft eine Formmasse aus Polyamid 11 oder Polyamid 12 mit einem Weichmacher und optionalem NBR-Kautschuk. Die Wirkung auf die Kristallinität unter Vakuum wird beschrieben.

EP-A-2 366 539 betrifft zweilagige Kunststoff-Leitungen für druckbeaufschlagte Flüssigkeiten. Es werden Formmassen aus Polyamid 612 verarbeitet, die über Schlagzähmodifikatoren verfügen. Zwei Schichten werden benötigt, beide auf Basis Polyamid 612. Die Innenschicht ist mit einem Blend aus teilkristallinem Polyolefin und synthetischem olefinischem Kautschuk versetzt.

US-A-2006/0074158 beschreibt Homo- und Copolyamide für flexible Formkörper. Eine gearbeitete Leitung für Kraftstoffe geeignete Formmasse beinhaltet zum Beispiel ein Polyamid 1010 mit Weichmacher.

Die EP-A-2 842 736 behandelt eine Druckluftbremsleitung. Die Aussenschicht ist auf Basis Polyamid 11 oder Polyamid 12. Hier wird zudem eine zweite innere Schicht beschrieben. Innenschichten auf Basis von Polyamid 11, Polyamid 12, Polyamid 612 und Polyamid 1012 werden gearbeitet.

Die US 4251424 beschreibt ein weichgemachtes Polyamid 612 mit einem wesentlichen Anteil von einem olefinischen Polymer bzw. Schlagzähmodifikator von 10 bis 40 Gew.-%, um eine gute Zinkchloridbeständigkeit zu erreichen.

### DARSTELLUNG DER ERFINDUNG

Die Abnahme der Menge Weichmacher durch Extraktion und/oder Auswaschung führt zu Versprödung der aus der Formmasse hergestellten Teile. Deshalb ist die Extraktion oder das Auswaschen der Additiven zu vermeiden.

Es ist Aufgabe der vorliegenden Erfindung, eine verbesserte flexible Leitung aus einer Polyamidformmasse mit geringer Migration und Auswaschung von Additiven, sowie guter Kerbschlagzähigkeit. Es geht also um eine Leitung, die sehr gute Berstdruckwerte sowie eine geringe Auswaschung aufweist. Zudem eine vorteilhafte Zinkchloridbeständigkeit trotz des kleinen Anteils Schlagzähmodifikator, was eine breite Anwendung der erfindungsgemässen Formmasse als Aussenschicht (oder Monorohr) in Leitungen vor allem aber nicht nur für Kraftstoffe ermöglichen soll.

Überraschend weist die erfindungsgemässe Leitung sehr gute Berstdruck-Werte bei erhöhter Temperatur auf.

Konkret betrifft die vorliegende Erfindung eine Kunststoffleitung mit wenigstens einer Schicht bestehend aus folgenden Bestandteilen:
(A) 70-94 Gewichtsprozent eines Polyamids ausgewählt aus der folgenden Gruppe: Polyamid 516, Polyamid 616, Polyamid 1016 oder Mischungen davon;
(B) 4-20 Gewichtsprozent Schlagzähmodifikator;
(C) 2-15 Gewichtsprozent, vorzugsweise 2 - 9 Gewichtsprozent Weichmacher;
(D) 0-5 Gewichtsprozent Additive verschieden von (B) und (C),
wobei die Summe von (A)-(D) 100 Gewichtsprozent ausmacht.

Dies mit der Massgabe, dass die Schicht kein Polyamid 6 enthält, auch nicht als Bestandteil der Komponente (D).

Eine erste bevorzugte Ausführungsform einer derartigen Kunststoffleitung ist dadurch gekennzeichnet, dass der wenigstens eine **Schlagzähmodifikator** (B) als ein mit einer Säure modifiziertes Ethylen-α-Olefin-Copolymeres ausgewählt ist. Dies insbesondere bevorzugt als ein mit einem Säureanhydrid, insbesondere mit Maleinsäureanhydrid, gepfropftes Ethylen/a-Olefin-Copolymeres, insbesondere derart modifiziertes respektive gepfropftes Ethylen/Butylen, Ethylen/Propylen, oder Ethylenpropylen/Ethylenbutylen Copolymeres.

Der Anteil an Schlagzähmodifikator (B) liegt typischerweise im Bereich von 5-18 Gewichtsprozent, vorzugsweise im Bereich von 10-16 Gewichtsprozent oder im Bereich von 12-15 Gewichtsprozent liegt.

Der wenigstens eine **Weichmacher** (C) kann bevorzugtermassen ausgewählt sein als Hydroxybenzoesäureester- (wie z.B. 2-Hexyldecyl-4-hydroxybenzoat, HDPB) und/oder Sulfonamid-basierter Weichmacher, bevorzugt der Klasse der N-substituierten Sulfonamid-Weichmacher, insbesondere bevorzugt als BBSA. Als Hydroxybenzoesäureester-basierter Weichmacher kommen z.B. Systeme wie folgt in Frage: 2-Hexyldecyl-4-hydroxybenzoat, Hexyloxyethoxyethyl p-hydroxybenzoat; Hexyloxypropoxypropyl p-hydroxybenzoat; Hexyloxybutoxybutyl p-hydroxybenzoat; Octyloxyethoxyethyl p-hydroxybenzoat; Octyloxypropoxypropyl p-hydroxybenzoat; Octyloxybutoxybutyl p-hydroxybenzoat; 2'-Ethylhexyloxyethoxyethyl p-hydroxybenzoat; 2'-Ethylhexyloxypropoxypropyl p-hydroxybenzoat; 2'-Ethylhexyloxybutoxybutyl p-hydroxybenzoat; Decyloxyethoxyethyl p-hydroxybenzoat; Decyloxypropoxypropyl p-hydroxybenzoat; Decyloxybutoxybutyl p-hydroxybenzoat, oder Mischungen davon.

Die Kunststoffleitung kann dadurch gekennzeichnet sein, dass der Anteil an Weichmacher (C) im Bereich von 2 - 9 oder 4-8 Gewichtsprozent, vorzugsweise im Bereich von 4.5-7 oder 4.5-6 Gewichtsprozent liegt.

Das wenigstens eine **Polyamid (A)** ist bevorzugt als Polyamid 616 ausgewählt.

Das Polyamid (A) hat vorzugsweise eine relative Lösungsviskosität, gemessen in m-Kresol nach ISO 307 (2007) bei einer Temperatur von 20 °C im Bereich von 2.0-2.4 vorzugsweise von 2.05-2.35.

Weiterhin vorzugsweise hat das wenigstens eine Polyamid (A) einen Schmelzpunkt im Bereich von 175 - 240°C, vorzugsweise 190 - 215 °C.

Der Anteil **Additive (D)** in der Kunststoffleitung liegt bevorzugt im Bereich von 0.1-3 Gewichtsprozent, vorzugsweise im Bereich von 0.5-1 Gewichtsprozent liegt.

Generell sind die Additive (D) der Schicht vorzugsweise ausgewählt aus wenigstens einem Zuschlagstoff der folgenden Gruppe: Antioxidantien, Verarbeitungshilfsmittel, UV-Stabilisatoren, Wärmestabilisatoren, Pigmente, Masterbatchträger, Leitfähigkeitsadditive, Gleitmittel oder Mischungen davon.

Die Kunststoffleitung liegt insbesondere bevorzugt als **Mehrschichtverbund** vor, und zwar in Form eines einen Innenraum umschliessenden Hohlkörpers, und die Schicht bildet dann bevorzugt die den Mehrschichtverbund nach aussen abschliessende Aussenschicht. Ein solcher Mehrschichtverbund besteht vorzugsweise aus zwei oder drei Schichten, einer an den Innenraum angrenzenden Innenschicht, für den Fall von 2 Schichten der an die Innenschicht grenzenden Aussenschicht und für den Fall von 3 Schichten einer an die Innenschicht grenzenden Mittelschicht und der an die Mittelschicht grenzenden Aussenschicht. Haftvermittlerschichten sind in diesem Fall möglich aber nicht erforderlich. Vorzugsweise kommt ein derartiger Mehrschichtverbund ohne zusätzliche Haftvermittlerschichten aus.

Die **Innenschicht** ist dabei vorzugsweise auf Basis von Polyamid 6 ausgebildet, insbesondere für Anwendungen im Automobilbereich. Weiterhin vorzugsweise ist die Mittelschicht auf Basis von EVOH ausgebildet.

Die Innenschicht verfügt bevorzugt über eine Kupferstabilisierung, vorzugsweise auf Basis von CuI (z.B. in Form von CuI/KI, vorzugsweise in einem Verhältnis 1:4-1:8), in einem Anteil im Bereich von 0.01-0.10 Gewichtsprozent, oder in einem Anteil von 0.03-0.07 Gewichtsprozent.

Die Innenschicht kann zudem einen Schlagzähmodifikator enthalten, vorzugsweise in einem Anteil im Bereich von 10-25 Gewichtsprozent oder in einem Bereich von 10-20 Gewichtsprozent, wobei es sich bevorzugtermassen beim Schlagzähmodifikator um ein mit einer Säure modifiziertes Ethylen-α-Olefin-Copolymeres handelt, insbesondere bevorzugt um ein mit einem Säureanhydrid, insbesondere mit Maleinsäureanhydrid, gepfropftes Ethylen/α-Olefin-Copolymeres, insbesondere derart modifiziertes respektive gepfropftes Ethylen/Butylen, Ethylen/Propylen, oder Ethylenpropylen/Ethylenbutylen Copolymeres handelt. Dabei sind die Gewichtsprozent jeweils bezogen sind auf 100 Gewichtsprozent des Materials zur Herstellung der Innenschicht.

Gemäss einer besonders bevorzugten Ausführungsform besteht die Innenschicht aus:
(A_I) Polyamid 6, vorzugsweise mit einer relativen Lösungsviskosität, gemessen in Schwefelsäure nach ISO 307 (2007) bei einer Temperatur von 20 °C im Bereich von 3.5-3.8, vorzugsweise 3.6-3.75;
(B_I) 10-30 Gewichtsprozent Schlagzähmodifikator
(C_I) 0.01-0.1 Gewichtsprozent Hitzestabilisator, vorzugsweise basiert auf Kupfer(I)
(D_I) 0-1 Gewichtsprozent Additive, vorzugsweise ausgewählt aus der Gruppe: Leitfähigkeitsadditive, Kristallisationsbeschleuniger, Verarbeitungshilfsmittel, Gleitmittel, und Mischungen davon
wobei sich die Summe der Komponenten (A_I)-(D_I) auf 100 Gewichtsprozent des Materials zur Herstellung der Innenschicht ergänzen.

Die **Mittelschicht** ist auf Basis von EVOH ausgebildet oder besteht aus einem EVOH, vorzugsweise aus einem EVOH mit einem Ethylen-Anteil im Bereich von 20-25 Gewichtsprozent, vorzugsweise im Bereich von 25-30 Gewichtsprozent besteht.

Die Schicht, insbesondere wenn sie als Aussenschicht gemäss in einem Mehrschichtverbund ausgebildet ist, weist bevorzugt eine Dicke im Bereich von 0.3-0.6 mm, vorzugsweise im Bereich von 0.4-0.5 mm auf.

Falls vorhanden weist die Innenschicht vorzugsweise eine Dicke im Bereich von 0.3-0.6 mm, vorzugsweise im Bereich von 0.4-0.5 mm auf.

Falls vorhanden, weist die Mittelschicht vorzugsweise eine Dicke im Bereich von 0.05-0.2 mm, vorzugsweise im Bereich von 0.075-0.125 mm auf.

Liegt ein Mehrschichtverbund vor, so liegt vorzugsweise dessen Gesamtwandstärke im Bereich von 0.5-2.5 mm, bevorzugtermassen im Bereich von 0.75-1.5 mm.

Eine solche Leitung wird vorzugsweise in einem Extrusionsprozess hergestellt, oder für den Fall einer Kunststoffleitung in Form eines Mehrschichtverbundes, in einem Coextrusionsprozess.

Eine solche Leitung kann wenigstens abschnittsweise als Wellrohr ausgebildet sein. Verwendung findet eine solche Leitung insbesondere als Leitung für Verbrennungsmotoren, insbesondere im Automobilbereich, insbesondere für Kraftstoff, Harnstoff oder Kühlmittel.

Weiter betrifft die vorliegende Erfindung ein Verfahren zur Herstellung einer Kunststoffleitung, welches dadurch gekennzeichnet ist, dass die wenigstens eine, oder im Fall einer Kunststoffleitung im Rahmen eines Mehrschichtverbundes, die 2 oder 3 Schichten, in einem kontinuierlichen und/oder diskontinuierlichen Prozess, bevorzugt in einem Extrusionsblasformen, einer Tandemextrusion, einem Ummantelungsverfahren oder einem (Co)Extrusionsprozess, zu einem Hohlkörper, insbesondere bevorzugt zu einem Rohr respektive einer Leitung oder einem Behälter geformt werden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigt:

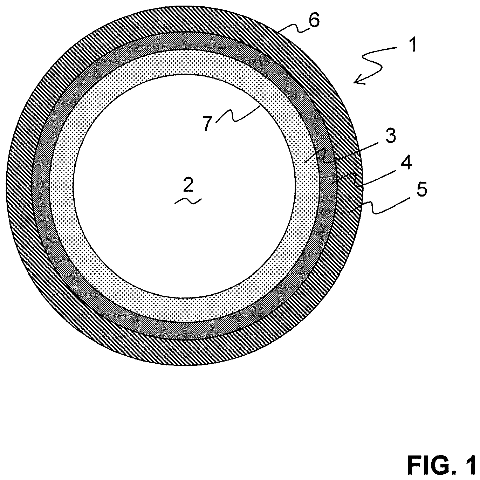

Fig. 1 eine Kraftstoffleitung in einer Schnittdarstellung senkrecht zur Verlaufsrichtung.

### BESCHREIBUNG BEVORZUGTER AUSFÜHRUNGSFORMEN

Figur 1 zeigt eine beispielhafte Kraftstoffleitung 1 nach der Erfindung in einem Schnitt quer zur Hauptverlaufsrichtung.

Die Querschnittsfläche kann dabei über die Hauptverlaufsrichtung konstant sein, d. h. das Rohr kann eine im Wesentlichen hohlzylindrische Form haben.

Die Querschnittsfläche kann aber auch über die Hauptverlaufsrichtung variieren, beispielsweise in Form eines Wellrohres.

Ein Innenraum 2 wird von der Rohrwand umschlossen. Auf den Innenraum 2 folgt zunächst radial nach aussen eine Innenschicht 3, welche mit der Innenfläche 7 an den Innenraum 2 grenzt und diesen begrenzt. Diese Innenschicht ist auf Basis von Polyamid 6 ausgebildet ohne weitere andere Polyamid-Bestandteile.

Direkt angrenzend an die Innenschicht 3 ohne dazwischenliegende Haftvermittlerschicht folgt eine Mittelschicht 4 im Sinne einer Barriereschicht, diese ist auf Basis von EVOH ausgebildet.

Direkt angrenzend nach aussen an diese Mittelschicht 4 und wiederum ohne dazwischenliegende Haftvermittlerschicht folgt die Aussenschicht 5. Die Aussenschicht 5 ist auf Basis von Polyamid 616 ausgebildet. Die Aussenfläche 6 der Aussenschicht 5 begrenzt die Leitung nach aussen.

### Eingesetzte Ausgangsmaterialien:

Polyamid 616 (Aussenschicht):
ηᵣₑₗ = 2.20 (0.5 Gew.-% in m-Kresol);
Tₘ gemessen mit DSC gemäss ISO 11357 (2011) = 196 °C.

Polyamid 6 (Innenschicht):
ηᵣₑₗ = 3,7 (1 Gew.-% in Schwefelsäure);
Tₘ gemessen mit DSC gemäss ISO 11357 (2011) = 222 °C.

Polyamid 612 (Aussenschicht, Vergleichsbeispiel):
ηᵣₑₗ = 2,3 (0.5 Gew.-% in m-Kresol);
Tₘ gemessen mit DSC gemäss ISO 11357 (2011) = 215-220 °C.

Ethylenvinylalkohol (Barriereschicht):
Als Material für die Barriereschicht wurde ein Ethylen/Vinylalkohol-Copolymer (EVOH) verwendet. Konkret handelte es sich bei den Ausführungsbeispielen um ein Produkt der Firma KURARAY, welches unter dem Namen EVAL® unter der Produktkennzeichnung F170B erhältlich ist und einen Ethylen-Gehalt von 27 mol-% aufweist. Es ist in Europa erhältlich bei der Firma EVAL Europe N.V. in Zwijindrecht, Belgien.

Weichmacher (Aussenschicht):
Als Weiclunacher (WM) wurde BBSA (N-Butylbenzolsulfonamid) verwendet. Dieses ist zum Beispiel erhältlich unter dem Markennamen Uniplex 214, von Lanxess.

Schlagzähmodifikator (für Innenschicht und Aussenschicht):
Als Schlagzähmodifikator (SZM) wurden säuremodifizierte Ethylen/a-Olefin-Copolymere eingesetzt, nämlich mit Maleinsäureanhydrid gepfropfte Ethylen-Butylen-Copolymere.

Schlagzähmodifikator der Innenschicht:
MVR-Wert (gemessen bei 230°C/2.16 kg) von 1.2 g/10min,
DSC-Glasübergangstemperatur, gemäss ISO-Norm 11357-2 (2013) von -65 °C,
erhältlich unter der Bezeichnung Tafmer MH5020C von Mitsui Chemicals.

Schlagzähmodifikator der Aussenschicht:
Olefinischer Schlagzähmodifikator, funktionalisiert mit Maleinsäureanhydrid, Blend aus Ethylen/Propylen-Copolymer und Ethylen/But-1-en-Copolymer im Gewichtsverhältnis 67 : 33, gepfropft mit 0,6 Gew.-% Maleinsäureanhydrid,
MVR-Wert 1.3 g/10min (gemessen bei 230°C/2.16 kg),
DSC-Glasübergangstemperatur, gemäss ISO-Norm 11357-2 (2013) von -60 °C, erhältlich unter der Bezeichnung Tafmer MC201 von Mitsui Chemicals.

Kupferstabilisator (Innenschicht):
Als Kupferstabilisator wurde CuI/KI (1:6) in einem Anteil von 0.05 Gewichtsprozent bezogen auf die Gesamtmasse der Innenschicht eingesetzt. Das Kupfer-(I)-iodid ist zum Beispiel von der Firma William Blythe Ltd kommerziell erhältlich, und das Kaliumiodid von der Firma Liquichem Handelsgesellschaft mbH.

Masterbatch (Aussenschicht):
Euthylen Schwarz, Russ-basiertes (40%) Farbmasterbatch auf Basis PE, erhältlich von BASF (Ludwigshafen, DE).

### Herstellung der Prüfkörper:

Rohre wurden co-extrudiert bei Massen-Temperaturen zwischen 210 und 260 °C unter Vakuum von -56 mbar und einer Extrusionsgeschwindigkeit von 32,8 m/min. Als Prüfkörper wurden Rohre mit einen Aussendurchmesser von 8 mm, der Wandstärke von 1 mm eingesetzt. Die Länge des Rohres wurde je nach Prüfungsanforderungen angepasst.

An den beschriebenen Rohraufbauten wurden folgende ***Tests*** durchgeführt:
Soweit nicht anders angegeben oder durch die Norm vorgegeben wurden die Messungen bei 50% relativer Feuchtigkeit durchgeführt.

***Auswaschung:*** Prüfung gemäss SAE J2260 mit Prüfkraftstoff FAM-B (gemäss SAE J1681 (2000)) - Test 96 Stunden, 60 °C verschlossenes Rohr von 200 cm; maximal Extrakt gemäss VW TL 52712 6 g/m² und die Obergrenze unlöslicher Bestandteile beträgt 0.7 g/m².

***Zinkchloridtest:*** Test auf einem Prüfkörper von Länge 30 cm, nach SAE J2260 (2004) Absatz 7.12.2, nach 200 Stunden in 50 % w/w ZnCl₂ (aq.). Ein Test auf Zillkchloridbeständigkeit gilt als bestanden, solange das Rohr nach der Lagerung keine Risse oder Spalten aufweist.

***Zugfestigkeit und E-Modul.*** Wurden nach ISO 527 gemessen mit einer Zuggeschwindigkeit von 1 mm/min an einem ISO 3167-konformen Zugstab.

***Rohrzugversuche:*** Rohrzugversuche wurden gemäss ISO 527-2 (2012) durchgeführt. Für Versuche wurden Prüfkörper der Länge 150 mm (Zugversuche in Extrusionsrichtung) oder 10 mm (bei Zugversuchen quer zur Extrusionsrichtung) verwendet. Prüftemperatur beträgt 23 °C und die Prüfgeschwindigkeit 100 mm/min (für Versuche in Extrusionsrichtung) oder 25 mm/min wenn Versuche quer zur Extrusionsrichtung erfolgen.

Konkret wurden folgende Messungen nach ISO 527 durchgeführt:
Dehnung bei max. Spannung (25 mm/min, quer zur Extrusionsrichtung), Maximale Dehnungsspannung (25 mm/min, quer zur Extrusionsrichtung), Dehnung bei max. Spannung (100 mm/min, in Extrusionsrichtung), Maximale Dehnungsspannung (100 mm/min, in Extrusionsrichtung).

Ansonsten wurden die Versuche entsprechend der Mindestanforderung der Norm Volkswagen TL 52712 (2016) durchgeführt, die Prüftemperatur beträgt 23 °C, soweit nicht von der Norm ausdrücklich anders vorgegeben (d.h. bei Kälteschlag, Aussehen, Auswaschmenge).

Konkret wurden folgende Messungen nach TL 52712: Bruchspannung, quer zur Extrusionsrichtung (25 mm/min); Bruchdehnung, quer zur Extrusionsrichtung (25 mm/min); Streckspannung, quer zur Extrusionsrichtung (25 mm/min); Bruchspannung in Extrusionsrichtung (100 mm/min), Streckspannung in Extrusionsrichtung (100 mm/min); Bruchdehnung in Extrusionsrichtung (100 mm/min);
***Kälteverhalten:*** wird in Anlehnung an TL 52712 gemäss VW-Norm PV 3905 geprüft. Die Fallhöhe der Kugel beträgt 65 cm. Mindestens 10 Prüflinge werden gemessen und die Anzahl der Brüche wird in Prozenten angegeben.

***Berstdruck:*** Der Berstdruck der hergestellten Formkörper wird in Anlehnung an DIN 73378 (1996) an Hohlkörpern mit Dimensionen von 8 mm Aussendurchmesser und Wanddicke von 1 mm gemessen.

***Relative Viskosität:*** DIN EN ISO 307 (2007), in 0,5 Gew.-%-iger m-Kresollösung oder 1 Gew-%-iger Schwefelsäurelösung (Polyamid 6) bei einer Temperatur von 20 °C.

***Thermisches Verhalten*** (Schmelzpunkt Tₘ, Schmelzenthalpie und Glasumwandlungstemperatur (T_{g}): ISO-Norm 11357-1 (2016), -2 (2013) und -3 (2011), Granulat, die Differential Scanning Calorimetry (DSC) wird mit Aufheizrate von 20 °C/min durchgeführt.

**Tabelle 1: Zusammensetzungen, in jedem Fall dazwischenliegende Barriereschicht aus EVOH jeweils mit einer Dicke von 0.2 mm**

| | | B1 | | VB1 | |
|---|---|---|---|---|---|
| | Einheit | Aussenschicht | Innenschicht | Aussenschicht | Innenschicht |
| Schichtdicke | mm | 0.4 mm | 0.4mm | 0.4 mm | 0.4mm |
| Polyamid 616 | Gew.-% | 72.15 | - | - | - |
| Polyamid 612 | Gew.-% | - | - | 71.9 | - |
| Polyamid 6 | Gew.-% | - | 78.45 | - | 72.5 |
| SZM (Tafmer MC201) | Gew.-% | 18.0 | - | 18.0 | 20.0 |
| SZM (Tafmer MH5020C) | Gew.-% | - | 20.0 | - | - |
| WM (BBSA) | Gew.-% | 8.0 | - | 10.0 | 6.0 |
| CuI/KI (1:6) | Gew.-% | - | 0.05 | - | - |
| Schwarzer Masterbatch | Gew.-% | 1.25 | 1.4 | - | 1.4 |
| Stabilisator* | Gew.-% | 0.6 | 0.1 | 0.1 | 0.1 |

| | | | | | |
|---|---|---|---|---|---|
| *: 0.1 Gew.-% MgStearat und 0.5 Gew.-% Hostanox PAR24, erhältlich von Clariant; | | | | | |

**Tabelle 2: Eigenschaften**

| Eigenschaft | Norm | Einheit | B1 | VB1 |
|---|---|---|---|---|
| Bruchspannung, quer zur Extrusionsrichtung | VW TL 52712 | MPa | 21 | 18 |
| Bruchdehnung, quer zur Extrusionsrichtung | VW TL 52712 | % | 260 | 220 |
| Dehnung bei max. Spannung quer | ISO 527 | % | 248 | 235 |
| Maximale Spannung quer | ISO 527 | MPa | 41 | 36 |
| Streckspannung, quer zur Extrusionsrichtung | VW TL 52712 | MPa | 37 | 32 |
| Maximale Spannung, längs | ISO 527 | MPa | 53 | 50 |
| Dehnung bei max. Spannung längs | ISO 527 | % | 395 | 262 |
| Streckspannung in Extrusionsrichtung | VW TL 52712 | MPa | 33 | 28 |
| Bruchdehnung in Extrusionsrichtung | VW TL 52712 | % | 392 | 310 |
| Berstdruck | DIN 73378 | bar | 101 | 82 |
| Kälteschlag, -40 °C, 500 g | VW TL 52712 | % | 0 | 40 |
| Kälteschlag, -40 °C, 880 g | VW TL 52712 | % | 0 | 20 |
| Aussehen 96h, 60 °C, FAM B | VW TL 52712 | | leichte Ausflockung | starke Ausflockung |
| Auswaschmenge 96h, 60 °C, FAM B | VW TL 52712 | mg/dm² | 25 | 337 |
| Zinkchlorid-Beständigkeit | SAE J2260 | | Keine Risse | Nicht bestanden |

| | | | | |
|---|---|---|---|---|
| FAM B: Prüfkraftstoff gemäss SAE J1681 (2000) | | | | |

Den Prüfwerten kann entnommen werden, dass die hervorragenden mechanischen Eigenschaften der Rohre unter Verwendung der erfindungsgemässen Formmasse als Aussenschicht eine deutliche Verbesserung gegenüber denjenigen unter Verwendung der Vergleichsformmasse als Aussenschicht darstellen. Dies betrifft eigentlich sämtliche mechanischen Eigenschaften und insbesondere auch die Kälteschlag-Widerstandsfähigkeit. Die Auswaschbeständigkeit des Vergleichsversuchs erfüllt keine industriellen Anforderungen und der Aufbau ist nicht genügend zinkchloridbeständig. Die Eignung der erfindungsgemässen Leitung für die Anwendung im Automobilbereich ist daher durch die guten mechanischen Eigenschaften sowie Auswaschmenge und die Zinkchlorid-Beständigkeit eindrücklich belegt und gegenüber dem Vergleichsbeispiel unerwartet.

**Bezugszeichenliste**

| | | | |
|---|---|---|---|
| 1 | Kraftstoffleitung | 5 | Aussenschicht |
| 2 | Innenraum von 2 | 6 | Aussenfläche von 1 |
| 3 | Innenschicht | 7 | Innenfläche von 1 |
| 4 | Mittelschicht | | |

## Patentansprüche

1. Kunststoffleitung (1) mit wenigstens einer Schicht (5) bestehend aus folgenden Bestandteilen:
(A) 70-94 Gewichtsprozent eines Polyamids ausgewählt aus der folgenden Gruppe: Polyamid 516, Polyamid 616, Polyamid 1016, oder Mischungen davon;
(B) 4-20 Gewichtsprozent Schlagzähmodifikator;
(C) 2-15 Gewichtsprozent Weichmacher;
(D) 0-5 Gewichtsprozent Additive verschieden von (B) und (C),
wobei die Summe von (A)-(D) 100 Gewichtsprozent ausmacht, und mit der Massgabe, dass die Schicht (5) kein Polyamid 6 enthält.

2. Kunststoffleitung (1) nach Anspruch 1, **dadurch gekennzeichnet, dass** der wenigstens eine Schlagzähmodifikator (B) als ein mit einer Säure modifiziertes Ethylen-α-Olefin-Copolymeres ausgewählt ist, insbesondere bevorzugt als ein mit einem Säureanhydrid, insbesondere mit Maleinsäureanhydrid, gepfropftes Ethylen/a-Olefin-Copolymeres, insbesondere derart modifiziertes respektive gepfropftes Ethylen/Butylen, Ethylen/Propylen, oder Ethylenpropylen/Ethylenbutylen Copolymeres.

3. Kunststoffleitung (1) nach einem der vorhergehenden Ansprüche, **dadurch gekennzeichnet, dass** der Anteil an Schlagzähmodifikator (B) im Bereich von 5-18 Gewichtsprozent, vorzugsweise im Bereich von 10-16 Gewichtsprozent oder im Bereich von 12-15 Gewichtsprozent liegt.

4. Kunststoffleitung (1) nach einem der vorhergehenden Ansprüche, **dadurch gekennzeichnet, dass** der wenigstens eine Weichmacher (C) ausgewählt ist als Hydroxybenzoesäureester- und/oder Sulfonamid-basierter Weichmacher, bevorzugt der Klasse der N-substituierten Sulfonamid-Weichmacher, insbesondere bevorzugt als BBSA.

5. Kunststoffleitung (1) nach einem der vorhergehenden Ansprüche, **dadurch gekennzeichnet, dass** der Anteil an Weichmacher (C) im Bereich von 2 - 9 Gewichtsprozent oder 4-8 Gewichtsprozent, vorzugsweise im Bereich von 4.5-7 oder 4.5-6 Gewichtsprozent liegt.

6. Kunststoffleitung (1) nach einem der vorhergehenden Ansprüche, **dadurch gekennzeichnet, dass** das wenigstens eine Polyamid (A) als Polyamid 616 ausgewählt ist
und/oder dass das Polyamid (A) eine relative Lösungsviskosität, gemessen in m-Kresol nach ISO 307 (2007) bei einer Temperatur von 20 °C im Bereich von 2.0-2.4 vorzugsweise von 2.05-2.35, aufweist,
und/oder dass das wenigstens eine Polyamid (A) einen Schmelzpunkt im Bereich von 175 - 240°C oder 180-240°C, vorzugsweise 190-215 °C oder 200-215 °C aufweist.

7. Kunststoffleitung (1) nach einem der vorhergehenden Ansprüche, **dadurch gekennzeichnet, dass** der Anteil Additive (D) im Bereich von 0.1-3 Gewichtsprozent, vorzugsweise im Bereich von 0.5-1 Gewichtsprozent liegt,
und/oder dass Additive (D) ausgewählt sind aus wenigstens einem Zuschlagstoff der folgenden Gruppe: Antioxidantien, Verarbeitungshilfsmittel, UV-Stabilisatoren, Wärmestabilisatoren, Pigmente, Masterbatchträger, Leitfähigkeitsadditive, Gleitmittel oder Mischungen davon.

8. Kunststoffleitung (1) nach einem der vorhergehenden Ansprüche, **dadurch gekennzeichnet, dass** die Kunststoffleitung als Mehrschichtverbund (1) in Form eines einen Innenraum (2) umschliessenden Hohlkörpers ausgebildet ist, und die Schicht (5) die den Mehrschichtverbund (1) nach aussen abschliessende Aussenschicht bildet.

9. Kunststoffleitung (1) nach Anspruch 8, **dadurch gekennzeichnet, dass** sie aus zwei oder drei Schichten besteht, einer an den Innenraum (2) angrenzenden Innenschicht (3), für den Fall von 2 Schichten der an die Innenschicht (3) grenzenden Aussenschicht (5) und für den Fall von 3 Schichten einer an die Innenschicht (3) grenzenden Mittelschicht (4) und der an die Mittelschicht (4) grenzenden Aussenschicht (5),
wobei die Innenschicht (3) vorzugsweise auf Basis von Polyamid 6 ausgebildet ist,
und wobei die Mittelschicht (4) vorzugsweise auf Basis von EVOH ausgebildet ist.

10. Kunststoffleitung (1) nach Anspruch 9, **dadurch gekennzeichnet, dass** die Innenschicht (3) eine Kupferstabilisierung aufweist, vorzugsweise auf Basis von CuI, in einem Anteil im Bereich von 0.01-0.10 Gewichtsprozent, oder in einem Anteil von 0.03-0.07 Gewichtsprozent,
und/oder dass die Innenschicht (3) einen Schlagzähmodifikator enthält, vorzugsweise in einem Anteil im Bereich von 10-25 Gewichtsprozent oder in einem Bereich von 10-20 Gewichtsprozent, wobei es sich bevorzugtermassen beim Schlagzähmodifikator um ein mit einer Säure modifiziertes Ethylen-α-Olefin-Copolymeres handelt, insbesondere bevorzugt um ein mit einem Säureanhydrid, insbesondere mit Maleinsäureanhydrid, gepfropftes Ethylen/α-Olefin-Copolymeres, insbesondere derart modifiziertes respektive gepfropftes Ethylen/Butylen, Ethylen/Propylen, oder Ethylenpropylen/Ethylenbutylen Copolymeres handelt
wobei die Gewichtsprozent jeweils bezogen sind auf 100 Gewichtsprozent des Materials zur Herstellung der Innenschicht (3),
wobei die Innenschicht (3) vorzugsweise besteht aus:
(A_I) Polyamid 6, vorzugsweise mit einer relativen Lösungsviskosität, gemessen in Schwefelsäure nach ISO 307 (2007) bei einer Temperatur von 20 °C im Bereich von 3.5-3.8, vorzugsweise 3.6-3.75;
(B_I) 10-30 Gewichtsprozent Schlagzähmodifikator;
(C_I) 0.01-0.1 Gewichtsprozent Hitzestabilisator, vorzugsweise basiert auf Kupfer(I);
(D_I) 0-1 Gewichtsprozent Additive, vorzugsweise ausgewählt aus der Gruppe: Leitfähigkeitsadditive, Kristallisationsbeschleuniger, Verarbeitungshilfsmittel, Gleitmittel, und Mischungen davon;
wobei sich die Summe der Komponenten (A_I)-(D_I) auf 100 Gewichtsprozent des Materials zur Herstellung der Innenschicht (3) ergänzen.

11. Kunststoffleitung (1) nach einem der vorhergehenden Ansprüche 9-10, **dadurch gekennzeichnet, dass** die Mittelschicht (4) auf Basis von EVOH ausgebildet ist oder aus einem EVOH besteht, vorzugsweise aus einem EVOH mit einem Ethylen-Anteil im Bereich von 20-25 Gewichtsprozent, vorzugsweise im Bereich von 25-30 Gewichtsprozent besteht.

12. Kunststoffleitung (1) nach einem der vorhergehenden Ansprüche, **dadurch gekennzeichnet, dass** die Schicht (5), insbesondere wenn sie als Aussenschicht (5) gemäss einem der Ansprüche 9-11 ausgebildet ist, eine Dicke im Bereich von 0.3-0.6 mm, vorzugsweise im Bereich von 0.4-0.5 mm aufweist,
und, falls vorhanden, die Innenschicht (3) eine Dicke im Bereich von 0.3-0.6 mm, vorzugsweise im Bereich von 0.4-0.5 mm aufweist,
und, falls vorhanden, die Mittelschicht (4) eine Dicke im Bereich von 0.05-0.2 mm, vorzugsweise im Bereich von 0.075-0.125 mm aufweist,
wobei vorzugsweise die Gesamtwandstärke des Mehrschichtverbundes gemäss einem der Ansprüche 9-12 im Bereich von 0.5-2.5 mm, bevorzugtermassen im Bereich von 0.75-1.5 mm liegt.

13. Kunststoffleitung (1) nach einem der vorhergehenden Ansprüche, **dadurch gekennzeichnet, dass** sie in einem bevorzugt kontinuierlichen Extrusionsprozess, Extrusionsblasformen, Tandemextrusion oder einem Ummantelungsprozess, oder für den Fall einer Kunststoffleitung nach einem der Ansprüche 9-12, in einem Coextrusionsprozess hergestellt ist.

14. Kunststoffleitung (1) nach einem der vorhergehenden Ansprüche in Form einer Leitung, welche wenigstens abschnittsweise als Wellrohr ausgebildet sein kann, vorzugsweise als Leitung für Verbrennungsmotoren, insbesondere im Automobilbereich, insbesondere für Kraftstoff, Harnstoff oder Kühlmittel.

15. Verfahren zur Herstellung einer Kunststoffleitung (1) nach einem der vorhergehenden Ansprüche, **dadurch gekennzeichnet, dass** die wenigstens eine, oder im Fall einer Kunststoffleitung nach einem der Ansprüche 9-12, die 2 oder 3 Schichten, in einem kontinuierlichen und/oder diskontinuierlichen Prozess, bevorzugt in einem Extrusionsblasformen, einer Tandemextrusion, einem Ummantelungsverfahren oder einem (Co)Extrusionsprozess, zu einem Hohlkörper, insbesondere bevorzugt zu einem Rohr respektive einer Leitung oder einem Behälter geformt werden.

## Claims

1. Plastics line (1) with at least one layer (5) consisting of the following components:
(A) 70-94 weight percent of a polyamide selected from the group consisting of: polyamide 516, polyamide 616, polyamide 1016, or mixtures thereof;
(B) 4-20 weight percent impact modifier;
(C) 2-15 weight percent of plasticiser;
(D) 0-5 weight percent of additives different from (B) and (C),
wherein the sum of (A)-(D) is 100 weight percent, and with the proviso that said layer (5) does not contain polyamide 6.

2. Plastics line (1) according to claim 1, wherein the at least one impact modifier (B) is selected as an ethylene-α-olefin copolymer modified with an acid, preferably as an ethylene/α-olefin copolymer grafted with an acid anhydride, in particular a maleic anhydride, in particular ethylene/butylene, ethylene/propylene, or ethylenepropylene/ethylene-butylene copolymer modified or grafted in this way.

3. Plastics line (1) according to any of the preceding claims, wherein the proportion of impact modifier (B) is in the range of 5-18 weight percent, preferably in the range of 10-16 weight percent or in the range of 12-15 weight percent.

4. Plastics line (1) according to any of the preceding claims, wherein the at least one plasticizer (C) is selected as a hydroxybenzoic acid ester and/or sulfonamide-based plasticizer, preferably of the class of N-substituted sulfonamide plasticizers, in particular preferably as BBSA.

5. Plastics line (1) according to any of the preceding claims, wherein the proportion of plasticizer (C) is in the range of 2-9 weight percent or 4-8 weight percent, preferably in the range of 4.5-7 or 4.5-6 weight percent.

6. Plastics line (1) according to any of the preceding claims, wherein the at least one polyamide (A) is selected as polyamide 616,
and/or wherein th polyamide (A) has a relative solution viscosity, measured in m-cresol according to ISO 307 (2007) at a temperature of 20°C, in the range of 2.0-2.4, preferably 2.05-2.35,
and/or wherein the at least one polyamide (A) has a melting point in the range of 175-240°C or 180-240°C, preferably 190-215°C or 200-215°C.

7. Plastics line (1) according to any of the preceding claims, wherein the proportion of additives (D) is in the range of 0.1-3 weight percent, preferably in the range of 0.5-1 weight percent,
and/or wherein additives (D) are selected from the group consisting of: antioxidants, processing aids, UV stabilizers, heat stabilizers, pigments, masterbatch carriers, conductivity additives, lubricants, or mixtures thereof.

8. Plastics line (1) according to one of the preceding claims, wherein the plastics line is a multilayer composite (1) in the form of a hollow body enclosing an inner space (2), and said layer (5) forms an outer layer, which closes off the multilayer composite (1) to the outside.

9. Plastics line (1) according to claim 8, wherein it consists of two or three layers, an inner layer (3) adjoining the inner space (2), in the case of two layers the said outer layer (5) adjoining the inner layer (3) and in the case of three layers a middle layer (4) adjoining the inner layer (3) and the said outer layer (5) adjoining the middle layer (4),
wherein the inner layer (3) is preferably based on polyamide 6,
and wherein the middle layer (4) is preferably based on EVOH.

10. Plastics line (1) according to claim 9, wherein the inner layer (3) comprises a copper stabilization, preferably based on CuI, in a proportion in the range of 0.01-0.10 weight percent, or in a proportion of 0.03-0.07 weight percent,
and/or in that the inner layer (3) contains an impact modifier, preferably in a proportion in the range of 10-25 weight percent or in a range of 10-20 weight percent, the impact modifier preferably being an acid-modified ethylene-α-olefin copolymer, in particular preferably an ethylene/α-olefin copolymer grafted with an acid anhydride, in particular with maleic anhydride, in particular ethylene/butylene, ethylene/propylene or ethylene-propylene/ethylene butylene copolymer modified or grafted in this way
wherein the weight percentages are each based on 100 weight percent of the material for producing the inner layer (3),
wherein the inner layer (3) preferably consists of:
(A_I) Polyamide 6, preferably having a relative solution viscosity measured in sulphuric acid according to ISO 307 (2007) at a temperature of 20 °C in the range 3.5-3.8, preferably 3.6-3.75;
(B_I) 10-30 weight percent impact modifier;
(C_I) 0.01-0.1 weight percent heat stabilizer, preferably based on copper (I);
(D_I) 0-1 weight percent of additives, preferably selected from the group: conductivity additives, crystallization accelerators, processing aids, lubricants, and mixtures thereof;
the sum of the components (A_I)-(D_I) adding up to 100weight percent of the material for producing the inner layer (3).

11. Plastics line (1) according to any of the preceding claims 9-10, wherein the middle layer (4) is formed on the basis of EVOH or consists of an EVOH, preferably an EVOH with an ethylene content in the range of 20-25 weight percent, preferably in the range of 25-30 weight percent.

12. Plastics line (1) according to one of the preceding claims, wherein the layer (5), in particular when formed as an outer layer (5) according to one of the claims 9-11, has a thickness in the range of 0.3-0.6 mm, preferably in the range of 0.4-0.5 mm, and, if present, the inner layer (3) has a thickness in the range 0.3-0.6 mm, preferably in the range 0.4-0.5 mm,
and, if present, the middle layer (4) has a thickness in the range 0.05-0.2 mm, preferably in the range 0.075-0.125 mm,
whereby preferably the total wall thickness of the multilayer composite according to one of the claims 9-12 is in the range of 0.5-2.5 mm, preferably in the range of 0.75-1.5 mm.

13. Plastics line (1) according to any of the preceding claims, wherein it is manufactured in a preferably continuous extrusion process, extrusion blow moulding, tandem extrusion or a sheathing process, or in the case of a plastic pipe according to any of claims 9-12, in a co-extrusion process.

14. Plastics line (1) according to one of the preceding claims in the form of a line which can be designed at least in sections as a corrugated pipe, preferably as a line for internal combustion engines, in particular in the automotive sector, in particular for fuel, urea or coolant.

15. Method for producing a plastics line (1) according to one of the preceding claims, wherein the at least one, or in the case of a plastic pipe according to one of the claims 9-12, the two or three layers, are formed into a hollow body, in particular preferably into a pipe or a line or a container, in a continuous and/or discontinuous process, preferably in an extrusion blow moulding, a tandem extrusion, a sheathing process or a (co)extrusion process.

## Revendications

1. Conduite en matière plastique (1) comprenant au moins une couche (5) constituée par les constituants suivants :
(A) 70 à 94 pour cent en poids d'un polyamide choisi dans le groupe suivant : polyamide 516, polyamide 616, polyamide 1016, ou des mélanges de ceux-ci ;
(B) 4 à 20 pour cent en poids d'un modificateur de la résistance aux impacts ;
(C) 2 à 15 pour cent en poids d'un plastifiant ;
(D) 0 à 5 pour cent en poids d'additifs différents de (B) et (C),
la somme de (A) à (D) représentant 100 pour cent en poids, et à condition que la couche (5) ne contienne pas de polyamide 6.

2. Conduite en matière plastique (1) selon la revendication 1, **caractérisée en ce que** ledit au moins un modificateur de la résistance aux impacts (B) est choisi en tant qu'un copolymère d'éthylène-α-oléfine modifié avec un acide, de manière notamment préférée en tant qu'un copolymère d'éthylène/α-oléfine greffé avec un anhydride d'acide, notamment avec un anhydride d'acide maléique, notamment un copolymère d'éthylène/butylène, d'éthylène/propylène ou d'éthylène-propylène/éthylène-butylène ainsi modifié ou greffé.

3. Conduite en matière plastique (1) selon l'une quelconque des revendications précédentes, **caractérisée en ce que** la proportion de modificateur de la résistance aux impacts (B) se situe dans la plage allant de 5 à 18 pour cent en poids, de préférence dans la plage allant de 10 à 16 pour cent en poids ou dans la plage allant de 12 à 15 pour cent en poids.

4. Conduite en matière plastique (1) selon l'une quelconque des revendications précédentes, **caractérisée en ce que** ledit au moins un plastifiant (C) est choisi en tant que plastifiant à base d'ester de l'acide hydroxybenzoïque et/ou de sulfonamide, de préférence de la classe des plastifiants sulfonamide N-substitués, de manière notamment préférée en tant que BBSA.

5. Conduite en matière plastique (1) selon l'une quelconque des revendications précédentes, **caractérisée en ce que** la proportion de plastifiant (C) se situe dans la plage allant de 2 à 9 pour cent en poids ou de 4 à 8 pour cent en poids, de préférence dans la plage allant de 4,5 à 7 ou de 4,5 à 6 pour cent en poids.

6. Conduite en matière plastique (1) selon l'une quelconque des revendications précédentes, **caractérisée en ce que** ledit au moins un polyamide (A) est choisi en tant que polyamide 616,
et/ou **en ce que** le polyamide (A) présente une viscosité en solution relative, mesurée dans du m-crésol selon ISO 307 (2007) à une température de 20 °C, dans la plage allant de 2,0 à 2,4, de préférence de 2,05 à 2,35,
et/ou **en ce que** ledit au moins un polyamide (A) présente un point de fusion dans la plage allant de 175 à 240 °C ou de 180 à 240 °C, de préférence de 190 à 215 °C ou de 200 à 215 °C.

7. Conduite en matière plastique (1) selon l'une quelconque des revendications précédentes, **caractérisée en ce que** la proportion d'additifs (D) se situe dans la plage allant de 0,1 à 3 pour cent en poids, de préférence dans la plage allant de 0,5 à 1 pour cent en poids,
et/ou **en ce que** les additifs (D) sont choisis parmi au moins un ajout du groupe suivant : les antioxydants, les adjuvants d'usinage, les stabilisateurs UV, les stabilisateurs thermiques, les pigments, les supports de mélanges maîtres, les additifs de conductivité, les lubrifiants ou leurs mélanges.

8. Conduite en matière plastique (1) selon l'une quelconque des revendications précédentes, **caractérisée en ce que** la conduite en matière plastique est configurée en tant que composite multicouche (1) sous la forme d'un corps creux entourant un espace intérieur (2), et la couche (5) forme la couche extérieure qui termine vers l'extérieur le composite multicouche (1).

9. Conduite en matière plastique (1) selon la revendication 8, **caractérisée en ce qu'**elle est constituée par deux ou trois couches, une couche intérieure (3) adjacente à l'espace intérieur (2), dans le cas de 2 couches, la couche extérieure (5) adjacente à la couche intérieure (3), et dans le cas de 3 couches, une couche intermédiaire (4) adjacente à la couche intérieure (3) et la couche extérieure (5) adjacente à la couche intermédiaire (4),
la couche intérieure (3) étant de préférence configurée à base de polyamide 6,
et la couche intermédiaire (4) étant de préférence configurée à base d'EVOH.

10. Conduite en matière plastique (1) selon la revendication 9, **caractérisée en ce que** la couche intérieure (3) comprend une stabilisation de cuivre, de préférence à base de CuI, en une proportion dans la plage allant de 0,01 à 0,10 pour cent en poids, ou en une proportion de 0,03 à 0,07 pour cent en poids,
et/ou **en ce que** la couche intérieure (3) contient un modificateur de la résistance aux impacts, de préférence en une proportion dans la plage allant de 10 à 25 pour cent en poids, ou dans une plage allant de 10 à 20 pour cent en poids, le modificateur de la résistance aux impacts consistant de manière davantage préférée en un copolymère d'éthylène-α-oléfine modifié avec un acide, de manière notamment préférée en un copolymère d'éthylène/α-oléfine greffé avec un anhydride d'acide, notamment avec un anhydride d'acide maléique, notamment en un copolymère d'éthylène/butylène, d'éthylène/propylène ou d'éthylène-propylène/éthylène-butylène ainsi modifié ou greffé,
les pourcentages en poids se rapportant à chaque fois à 100 pour cent en poids du matériau pour la fabrication de la couche intérieure (3),
la couche intérieure (3) étant de préférence constituée par :
(A_I) du polyamide 6, de préférence ayant une viscosité en solution relative, mesurée dans de l'acide sulfurique selon ISO 307 (2007) à une température de 20 °C, dans la plage allant de 3,5 à 3,8, de préférence de 3,6 à 3,75 ;
(B_I) 10 à 30 pour cent en poids d'un modificateur de la résistance aux impacts ;
(C_I) 0,01 à 0,1 pour cent en poids d'un stabilisateur thermique, de préférence à base de cuivre(I) ;
(D_I) 0 à 1 pour cent en poids d'additifs, de préférence choisis dans le groupe constitué par : les additifs de conductivité, les accélérateurs de cristallisation, les adjuvants d'usinage, les lubrifiants et leurs mélanges ;
la somme des composants (A_I) à (D_I) étant de 100 pour cent en poids du matériau pour la fabrication de la couche intérieure (3).

11. Conduite en matière plastique (1) selon l'une quelconque des revendications 9 à 10 précédentes, **caractérisée en ce que** la couche intermédiaire (4) est configurée à base d'EVOH ou est constituée par un EVOH, de préférence est constituée par un EVOH ayant une proportion d'éthylène dans la plage allant de 20 à 25 pour cent en poids, de préférence dans la plage allant de 25 à 30 pour cent en poids.

12. Conduite en matière plastique (1) selon l'une quelconque des revendications précédentes, **caractérisée en ce que** la couche (5), notamment lorsqu'elle est configurée en tant que couche extérieure (5) selon l'une quelconque des revendications 9 à 11, présente une épaisseur dans la plage allant de 0,3 à 0,6 mm, de préférence dans la plage allant de 0,4 à 0,5 mm,
et, si elle est présente, la couche intérieure (3) présente une épaisseur dans la plage allant de 0,3 à 0,6 mm, de préférence dans la plage allant de 0,4 à 0,5 mm,
et, si elle est présente, la couche intermédiaire (4) présente une épaisseur dans la plage allant de 0,05 à 0,2 mm, de préférence dans la plage allant de 0,075 à 0,125 mm,
l'épaisseur de paroi totale du composite multicouche selon l'une quelconque des revendications 9 à 12 se situant de préférence dans la plage allant de 0,5 à 2,5 mm, de manière davantage préférée dans la plage allant de 0,75 à 1,5 mm.

13. Conduite en matière plastique (1) selon l'une quelconque des revendications précédentes, **caractérisée en ce qu'**elle est fabriquée dans un procédé d'extrusion de préférence continu, une extrusion-soufflage, une extrusion tandem ou un procédé de gainage ou, dans le cas d'une conduite en matière plastique selon l'une quelconque des revendications 9 à 12, dans un procédé de coextrusion.

14. Conduite en matière plastique (1) selon l'une quelconque des revendications précédentes sous la forme d'une conduite, qui peut être configurée au moins en sections en tant que tube ondulé, de préférence en tant que conduite pour moteurs à combustion, notamment dans le domaine automobile, notamment pour carburant, urée ou agent réfrigérant.

15. Procédé de fabrication d'une conduite en matière plastique (1) selon l'une quelconque des revendications précédentes, **caractérisé en ce que** ladite au moins une couche ou, dans le cas d'une conduite en matière plastique selon l'une quelconque des revendications 9 à 12, les 2 ou 3 couches sont façonnées dans un procédé continu et/ou discontinu, de préférence dans une extrusion-soufflage, une extrusion tandem, un procédé de gainage ou un procédé de (co)extrusion, en un corps creux, de manière notamment préférée en un tube ou une conduite ou un contenant.
